# EUROPEAN PATENT APPLICATION

(11) **EP 4 243 535 A1**
(43) Date of publication of application: **13.09.2023**
(21) Application number: 22736593.9
(22) Date of filing: 07.01.2022
(51) Int. Cl.: H04W 72/04

(54) **LISTEN BANDWIDTH DETERMINATION METHOD AND APPARATUS, INFORMATION TRANSMISSION METHOD AND APPARATUS, AND COMMUNICATION DEVICE**

(30) Priority: 11.01.2021 CN 202110029287
(71) Applicant: Vivo Mobile Communication Co., Ltd., Dongguan, Guangdong 523863 (CN)
(72) Inventor: JIANG, Lei, Dongguan, Guangdong 523863 (CN); LI, Gen, Dongguan, Guangdong 523863 (CN)
(74) Representative: Murgitroyd & Company
(86) International application number: PCT/CN2022/070719
(87) International publication number: WO 2022/148432

(57) **Abstract**

This application discloses a listen bandwidth determination method and apparatus, an information transmission method and apparatus, and a communication device. The listen bandwidth determination method includes: adjusting, by a communication device, a listen before talk LBT bandwidth of the shared spectrum based on a first bandwidth. The first bandwidth includes at least one of the following: a bandwidth of a current active bandwidth part BWP; a bandwidth of an initial BWP; and a bandwidth of a target resource scheduled or configured by a network.

## Description

### CROSS-REFERENCE TO RELATED APPLICATION

This application claims the priority of Chinese Patent Application No. 202110029287.0 filed in China on January 11, 2021, the entire content of which is hereby incorporated by reference.

### TECHNICAL FIELD

This application belongs to the field of communication technologies, and in particular, relates to a listen bandwidth determination method and apparatus, an information transmission method and apparatus, and a communication device.

### BACKGROUND

In future communication systems, a shared spectrum, such as an unlicensed band (unlicensed band), may be used as a supplement to the unlicensed band (unlicensed band) to help operators expand services. In order to maintain consistency with the deployment of New Radio (NR) and maximize unlicensed access based on the NR, the unlicensed band may operate in frequency bands such as 5 GHz, 37 GHz, and 60 GHz. Since the unlicensed band is shared by a plurality of technologies (RATs), such as Wireless Fidelity (Wireless Fidelity, Wi-Fi), radar, and long term evolution-licensed assisted access (Long Term Evolution-Licensed Assisted Access, LTE-LAA), during use, the unlicensed band needs to comply with rules such as listen before talk (Listen Before Talk, LBT), and maximum channel occupancy time (Maximum Channel Occupancy Time, MCOT), to ensure that all devices can use the resource fairly. When a transmission node needs to transmit information, the transmission node needs to perform the LBT first, and the transmission node performs power detection (energy detection, ED) on the surrounding nodes. When a power less than a threshold is detected, a channel is considered as idle (idle), so that the transmission node may transmit the information. Otherwise, the channel is considered as busy and the transmission node cannot transmit the information. The transmission node may be a base station, a terminal, a Wi-Fi node, or the like. After the transmission node starts transmission, a time the transmission node occupies the channel cannot exceed the MCOT.

In a frequency band from 52.6 GHz to 71 GHz, a channel bandwidth of Wi-Fi can reach 2.16 GHz, and the LBT is performed based on the channel bandwidth through Wi-Fi. A maximum bandwidth and a minimum bandwidth supported by a terminal for the NR system is still under discussion, but the supported maximum bandwidth does not exceed 2.16 GHz. Therefore, for coexistence with Wi-Fi in the 6 GHz band, the LBT bandwidth cannot exceed a Wi-Fi channel bandwidth of 20 MHz. Currently, the LBT bandwidth in the frequency band from 52.6 GHz to 71 GHz is a continuous LBT bandwidth. A discussion result of the LBT bandwidth with the channel bandwidth (channel bandwidth) is as follows:
Option 1: the LBT bandwidth is greater than the channel bandwidth;
Option 2: the LBT bandwidth is equal to a smaller one of the channel bandwidth and a transmission bandwidth;
Option 3: the LBT bandwidth may be greater than the channel bandwidth;
Option 4: the LBT bandwidth may be less than the channel bandwidth, with each channel having a plurality of LBT subbands; and
Option 5: the LBT bandwidth is equal to a minimum supported channel bandwidth or a multiple of the supported minimum bandwidth.

The possible definition of the LBT bandwidth only considers the relationship with the channel bandwidth. In an actual system, a channel bandwidth is merely a relatively large range, and the system will further configure at least one bandwidth part (bandwidth part, BWP) for each terminal. Each terminal has only one active bandwidth (active BWP) at the same time. A bandwidth of the BWP is less than or equal to a channel bandwidth. The base station further schedules or configures the transmission of the terminal within the BWP. The LBT is used to listen on a channel for transmission. Since an actual configured or scheduled resource bandwidth is less than or equal to a bandwidth of the active BWP, a current definition of the LBT bandwidth may lead to unnecessary listen on inactive or unscheduled resources.

### SUMMARY

Embodiments of this application provide a listen bandwidth determination method and apparatus, an information transmission method and apparatus, and a communication device, which can resolve a problem of unnecessary listen on inactive or unscheduled resources caused by a definition of an LBT bandwidth in the related art.

According to a first aspect, an embodiment of this application provides a listen bandwidth determination method for a shared spectrum. The method includes:
adjusting, by a communication device, a listen before talk LBT bandwidth of the shared spectrum based on a first bandwidth, where the first bandwidth includes at least one of the following:
a bandwidth of a current active bandwidth part BWP;
a bandwidth of an initial BWP; and
a bandwidth of a target resource scheduled or configured by a network.

According to a second aspect, an embodiment of the present disclosure provides an information transmission method. The method includes:
if a plurality of consecutive transmissions, corresponding to different beam information, are multiplexed on a time domain resource, performing, by a terminal, any one of the following operations after performing one transmission corresponding to beam information:
performing, by the terminal without performing listen before talk LBT, a subsequent transmission after beam switching; and
performing, by the terminal after beam switching, one-shot LBT for new transmissions and performing the subsequent transmission based on a listening result.

According to a third aspect, an embodiment of this application provides a listen bandwidth determination apparatus for a shared spectrum. The apparatus includes:
an adjustment module, configured to adjust a listen before talk LBT bandwidth of the shared spectrum based on a first bandwidth, where the first bandwidth includes at least one of the following:
a bandwidth of a current active bandwidth part BWP;
a bandwidth of an initial BWP; and
a bandwidth of a target resource scheduled or configured by a network.

According to a fourth aspect, an embodiment of the present disclosure provides an information transmission apparatus. The method apparatus:
an operating module, configured to: if a plurality of consecutive transmissions, corresponding to different beam information, are multiplexed on a time domain resource, perform any one of the following operations after performing one transmission corresponding to beam information:
performing a subsequent transmission after beam switching without performing listen before talk LBT; and
performing one-shot LBT for new transmissions after beam switching and performing the subsequent transmission based on a listening result.

According to a fifth aspect, an embodiment of this application provides a communication device. The communication device includes a processor, a memory, and programs or instructions stored in the memory and executable on the processor, and when the programs or the instructions are executed by the processor, the steps of the method in the first aspect are implemented.

According to a sixth aspect, an embodiment of this application provides a terminal. The terminal includes a processor, a memory, and programs or instructions stored in the memory and executable on the processor, and when the programs or the instructions are executed by the processor, the steps of the method in the second aspect are implemented.

According to a seventh aspect, an embodiment of this application provides a readable storage medium storing programs or instructions, and when the programs or the instructions are executed by a processor, the steps of the method in the first aspect or the second aspect are implemented.

According to an eighth aspect, an embodiment of this application provides a chip. The chip includes a processor and a communication interface, the communication interface is coupled to the processor, and the processor is configured to execute programs or instructions on a network side device to implement the method in the first aspect or the second aspect.

According to a ninth aspect, an embodiment of this application provides a computer program product stored in a non-transitory storage medium, and the computer program product is executed by at least one processor to implement the steps of the method in the first aspect, or implement the steps of the method in the second aspect.

According to a tenth aspect, an embodiment of this application provides a communication device configured to perform the steps of the method in the first aspect, or perform the steps of the method in the second aspect.

In this embodiment of this application, dynamically adjusting the LBT bandwidth based on at least one of the bandwidth of the current active BWP, the bandwidth of the initial BWP, and the bandwidth of the target resource scheduled or configured by the network can avoid unnecessary channel listening by the communication devices on non-scheduled or inactive resources.

### BRIEF DESCRIPTION OF THE DRAWINGS

FIG. 1 is a block diagram of a wireless communication system to which embodiments of this application may be applied;
FIG. 2 is a schematic step diagram of a listen bandwidth determination method for a shared spectrum according to an embodiment of this application;
FIG. 3 is a schematic step diagram of an information transmission method according to an embodiment of this application;
FIG. 4 is a schematic structural diagram of a listen bandwidth determination apparatus for a shared spectrum according to an embodiment of this application;
FIG. 5 is a schematic structural diagram of an information transmission apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network side device according to an embodiment of this application.

### DETAILED DESCRIPTION

The technical solutions in the embodiments of this application are clearly and completely described below with reference to the drawings in the embodiments of this application. Apparently, the described embodiments are merely some of the embodiments of this application rather than all of the embodiments. All other embodiments obtained by a person of ordinary skill in the art based on the embodiments of this application without creative efforts shall fall within the protection scope of this application.

The terms "first", "second", and the like in the description and claims of this application are used to distinguish between similar objects, rather than describe a specific sequence or order. It should be understood that the terms used in this case may be transposed where appropriate, so that the embodiments of this application may be implemented in a sequence other than those illustrated or described herein. In addition, objects indicated by "first", "second", and the like are usually of the same class and do not limit a number of objects. For example, there may be one or more first objects. In addition, "and/or" in the description and claims indicates at least one of the connected objects, and the character "/" generally indicates that the associated objects at front and rear are in an "or" relationship.

It should be noted that, the technology described in the embodiments of this application is not limited to be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system and another system. The terms "system" and "network" in the embodiments of this application are usually interchangeably used, and the technology described can be used for both the systems and radio technologies mentioned above, as well as for another system and radio technology. A new radio (New Radio, NR) system is described below for an illustrative purpose, and the term NR is used in most of the following descriptions, although these technologies may be applied to applications other than applications of the NR system, such as a 6^{th} Generation (6^{th} Generation, 6G) communication system.

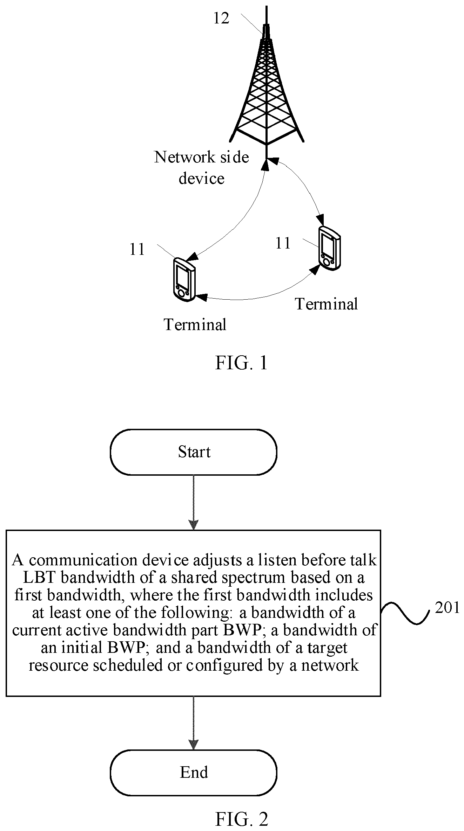

FIG. 1 is a block diagram of a wireless communication system to which embodiments of this application may be applied. The wireless communication system includes a terminal 11 and a network side device 12. The terminal 11 may also be referred to as a terminal device or a user terminal (User Equipment, UE). The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), a wearable device (Wearable Device), an on-board device (Vehicle User Equipment, VUE), or a pedestrian terminal (Pedestrian User Equipment, PUE). The wearable device includes a bracelet, a headphone, glasses, and the like. It should be noted that, a specific type of the terminal 11 is not defined in the embodiments of this application. The network side device 12 may be a base station or a core network. The base station may be referred to as a node B, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolving NodeB (eNB), a household NodeB, a household evolved NodeB, a wireless local area network (Wireless Local Area Networks, WLAN) access point, a Wi-Fi node, a transmitting receiving point (Transmitting Receiving Point, TRP), or another appropriate term in the art. The base station is not limited to a specific technical term, as long as the same technical effect can be achieved. It should be noted that, in this embodiment of this application, only a base station in the NR system is used as an example, but the specific type of the base station is not limited.

A listen bandwidth determination method and apparatus, an information transmission method and apparatus, and a communication device provided in the embodiments of this application are described below in detail through specific embodiments and application scenarios with reference to the drawings.

An embodiment of this application provides a listen bandwidth determination method for a shared spectrum. The method includes the following steps:

Step 201: A communication device adjusts a listen before talk LBT bandwidth of the shared spectrum based on a first bandwidth, where the first bandwidth includes at least one of the following:
a bandwidth of a current active bandwidth part BWP;
a bandwidth of an initial BWP (initial BWP); and
a bandwidth of a target resource scheduled or configured by a network.

The communication device in this embodiment of this application may be a terminal, or may be a network side device. This is not specifically limited herein.

In this embodiment of this application, the LBT bandwidth is dynamically variable, and the dynamic adjustment of LBT bandwidth depends on the bandwidth of the current active BWP or the bandwidth of the target resource.

In an optional embodiment, step 201 includes:
adjusting the LBT bandwidth of the shared spectrum to a minimum bandwidth that covers the first bandwidth.

The minimum bandwidth that covers the first bandwidth includes any one of the following:
the first bandwidth;
an integer multiple of the first bandwidth;
a unit bandwidth that covers the first bandwidth; and
an integer multiple of the unit bandwidth that covers the first bandwidth.

### Example I

The LBT bandwidth is equal to the bandwidth of the current active BWP. During initial access, the LBT bandwidth is equal to the bandwidth of the initial BWP, and includes an uplink initial BWP and a downlink initial BWP. After the network side device configures at least one BWP for the terminal, the LBT bandwidth is equal to the bandwidth of the current active BWP. If the active BWP changes, that is, BWP switching occurs, the LBT bandwidth is equal to a BWP bandwidth after switching. The LBT bandwidth changes with the active BWP. If the LBT bandwidth includes one or more finite values, a bandwidth of the configured BWP is defined as one or an integer multiple of the above LBT bandwidths.

Optionally, the LBT bandwidth is a minimum bandwidth that covers the active BWP resource, which may be a unit bandwidth that meets the condition or an integer multiple of the unit bandwidth. The unit bandwidth is a bandwidth preconfigured or predefined by the system.

In an optional embodiment, the target resource scheduled or configured by the network includes at least one of the following:
at least one physical uplink shared channel (Physical Uplink Shared Channel, PUSCH) resource for a configured grant (Configured Grant, CG);
at least one physical uplink transmission resource for a dynamic grant (Dynamic Grant, DG), such as a physical uplink shared channel PUSCH or a physical uplink control channel PUCCH;
at least one physical downlink shared channel PDSCH resource for semi-persistent scheduling (Semi-Persistent Scheduling, SPS);
at least one physical random access channel (Physical Random Access Channel, PRACH) resource; and
at least one sounding reference signal (Sounding Reference Signal, SRS) resource.

### Example II

For a CG PUSCH transmission, the LBT bandwidth depends on a bandwidth occupied by the CG PUSCH resource. A bandwidth of the CG PUSCH resource is indicated by the network side device, which includes a semi-static or dynamic indication, that is, a radio resource control (Radio Resource Control, RRC) indication or a downlink control information (Downlink Control Information, DCI) indication. The LBT bandwidth may be equal to a minimum bandwidth that covers the CG PUSCH resource. The bandwidth may be equal to a bandwidth of the CG PUSCH, or may be a unit bandwidth that meets the condition or an integer multiple of the unit bandwidth. The unit bandwidth is a bandwidth preconfigured or predefined by the system. The terminal dynamically adjusts the LBT bandwidth based on bandwidths of different CG PUSCH resources.

For a DG PUSCH/PUCCH transmission, the LBT bandwidth depends on a bandwidth occupied by the DG PUSCH/PUCCH resource. The bandwidth of the DG PUSCH/PUCCH resource is dynamically indicated by the network side device. The LBT bandwidth may be equal to a minimum bandwidth that covers the PUSCH/PUCCH resource. The bandwidth may be equal to the indicated bandwidth of the PUSCH/PUCCH, or may be a unit bandwidth that meets the condition or an integer multiple of the unit bandwidth. The unit bandwidth is a bandwidth preconfigured or predefined by the system. The terminal dynamically adjusts the LBT bandwidth based on bandwidths of different DG PUSCH/PUCCH resources.

For the SPS PDSCH, the LBT bandwidth depends on a bandwidth of the SPS PDSCH resource. The bandwidth of the SPS PDSCH resource is dynamically indicated by the network side device. The LBT bandwidth may be equal to a minimum bandwidth that covers the SPS PDSCH resource. The bandwidth may be equal to the indicated bandwidth of the SPS PDSCH resource, or may be a unit bandwidth that meets the condition or an integer multiple of the unit bandwidth. The unit bandwidth is a bandwidth preconfigured or predefined by the system. The network side device dynamically adjusts the LBT bandwidth based on bandwidths of different SPS PDSCH resources.

In addition, if the network side device transmits a plurality of SPS PDSCHs simultaneously, the LBT bandwidth needs to cover bandwidths of all SPS PDSCH resources that need to be transmitted. Similarly, the bandwidth may be equal to a set of bandwidths of the plurality of SPS PDSCH resources that need to be transmitted, or may be a unit bandwidth that meets the condition or an integer multiple of the unit bandwidth. The unit bandwidth is a bandwidth preconfigured or predefined by the system.

In conclusion, dynamically adjusting, by the communication device, the LBT bandwidth based on at least one of the bandwidth of the current active BWP, the bandwidth of the initial BWP, and the bandwidth of the target resource scheduled or configured by the network can avoid unnecessary channel listening by the communication devices on unscheduled or inactive resources.

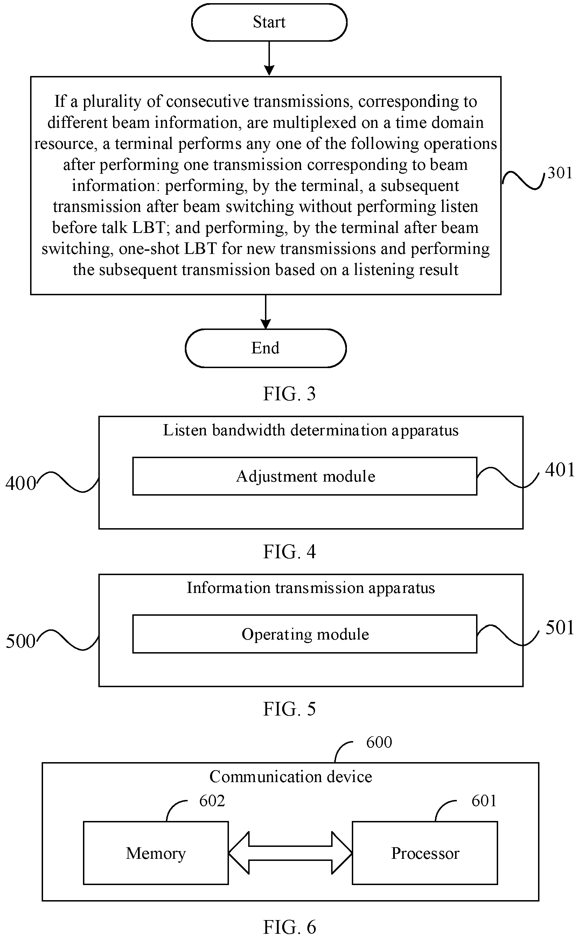

As shown in FIG. 3, an embodiment of this application provides an information transmission method. The method includes the following steps:

Step 301: If a plurality of consecutive transmissions, corresponding to different beam information, are multiplexed on a time domain resource, a terminal performs any one of the following operations after performing one transmission corresponding to beam information:
performing, by the terminal, a subsequent transmission after beam switching without performing listen before talk LBT; and
performing, by the terminal after beam switching, one-shot LBT (one-shot LBT) for new transmissions and performing the subsequent transmission based on a listening result.

The beam information may also be referred to as spatial relation (spatial relation) information, spatial domain transmission filter (spatial domain transmission filter) information, spatial domain filter (spatial filter) information, transmission configuration indication state (TCI state) information, quasi common access (QCL) information, a QCL parameter, or the like. That the plurality of consecutive transmissions on the time domain resource correspond to the different beam information means that the different consecutive transmissions on the time domain resource correspond to the different spatial relation information.

In an optional embodiment, the performing, by the terminal, a subsequent transmission after beam switching without performing listen before talk LBT includes:
if a first condition is met, performing, by the terminal, the subsequent transmission after beam switching without performing listen before talk LBT, where the first condition includes at least one of the following:
that a beam switching time is less than or equal to a first threshold, where the first threshold is X1 us, and X1 may be equal to 16, 8, or a smaller value; and
that the terminal obtains a channel occupancy time by applying omnidirectional LBT for a transmission corresponding to previous beam information.

In another optional embodiment, the performing, by the terminal after beam switching, one-shot LBT for new transmissions and performing the subsequent transmission based on a listening result includes:
if a second condition is met, performing, by the terminal after beam switching, one-shot LBT for the new transmissions and performing the subsequent transmission based on the listening result, where the second condition includes at least one of the following:
that a beam switching time is greater than or equal to a second threshold, where the second threshold is X2 us, and X2 may be equal to 16, 8, or a smaller value;
that the terminal obtains a channel occupancy time by applying directional (directional) LBT for a transmission corresponding to previous beam information; and
that a listen beam direction used by the terminal when obtaining the channel occupancy time during the transmission corresponding to the previous beam information does not include a listening beam direction corresponding to a beam currently being transmitted.

It should be noted that, the first threshold and the second threshold may be the same or different. This is not specifically limited herein.

In at least one embodiment of this application, the method further includes:
discarding a transmission that overlaps the beam switching time; or performing a punctuated transmission on the transmission that overlaps the beam switching time.

If different beamforming directions are used for the plurality of transmissions continuously configured or scheduled on the time domain resource, an embodiment of this application provides different operations after the terminal completes a transmission, which can improve transmission efficiency while ensuring transmission quality.

It should be noted that, the listen bandwidth determination method for a shared spectrum or the information transmission method provided in this embodiment of this application may be performed by a listen bandwidth determination apparatus or an information transmission apparatus, or may be performed by a control module in the listen bandwidth determination apparatus or the information transmission apparatus for loading and performing the listen bandwidth determination method or the information transmission method. In this embodiment of this application, that the listen bandwidth determination apparatus or the information transmission apparatus performs the listen bandwidth determination method or the information transmission method is used as an example to describe the listen bandwidth determination apparatus or the information transmission apparatus provided in this embodiment of this application.

As shown in FIG. 4, an embodiment of this application provides a listen bandwidth determination apparatus 400 for a shared spectrum. The apparatus includes:
an adjustment module 401, configured to adjust a listen before talk LBT bandwidth of the shared spectrum based on a first bandwidth, where the first bandwidth includes at least one of the following:
a bandwidth of a current active bandwidth part BWP;
a bandwidth of an initial BWP; and
a bandwidth of a target resource scheduled or configured by a network.

In an optional embodiment, the adjustment module includes:
an adjustment submodule, configured to adjust the LBT bandwidth of the shared spectrum to a minimum bandwidth that covers the first bandwidth.

In an optional embodiment, the minimum bandwidth that covers the first bandwidth includes any one of the following:
the first bandwidth;
an integer multiple of the first bandwidth;
a unit bandwidth that covers the first bandwidth; and
an integer multiple of the unit bandwidth that covers the first bandwidth.

In an optional embodiment, the target resource scheduled or configured by the network includes at least one of the following:
at least one physical uplink shared channel resource for a configured grant;
at least one physical uplink transmission resource for a dynamic grant;
at least one physical downlink shared channel resource for semi-persistent scheduling;
at least one physical random access channel resource; and
at least one sounding reference signal resource.

In this embodiment of this application, dynamically adjusting, by the communication device, the LBT bandwidth based on at least one of the bandwidth of the current active BWP, the bandwidth of the initial BWP, and the bandwidth of the target resource scheduled or configured by the network can avoid unnecessary channel listening by the communication devices on non-scheduled or non-active resources.

It should be noted that, the listen bandwidth determination apparatus provided in this embodiment of this application is an apparatus that can perform the above listen bandwidth determination method, and all embodiments of the above listen bandwidth determination method are applicable to the apparatus and the apparatus can achieve the same or similar beneficial effects.

As shown in FIG. 5, an embodiment of this application further provides an information transmission apparatus 500. The apparatus includes:
an operating module 501, configured to: if a plurality of consecutive transmissions, corresponding to different beam information, are multiplexed on a time domain resource, perform any one of the following operations after performing one transmission corresponding to beam information:
performing a subsequent transmission after beam switching without performing listen before talk LBT; and
performing one-shot LBT for new transmissions after beam switching and performing the subsequent transmission based on a listening result.

In an optional embodiment, the operating module includes:
a first operating submodule, configured to: if a first condition is met, perform the subsequent transmission after beam switching without performing listen before talk LBT, where the first condition includes at least one of the following:
that a beam switching time is less than or equal to a first threshold; and
that the terminal obtains a channel occupancy time by applying omnidirectional LBT for a transmission of previous beam information.

In an optional embodiment, the operating module includes:
a second operating submodule, configured to: if a second condition is met, perform one-shot LBT for the new transmissions and perform the subsequent transmission based on the listening result after beam switching, where the second condition includes at least one of the following:
that a beam switching time is greater than or equal to a second threshold;
that the terminal obtains a channel occupancy time by applying directional LBT for a transmission to previous beam information; and
that a listen beam direction used by the terminal when obtaining the channel occupancy time during the transmission of the previous beam information does not include a listening beam direction corresponding to a beam currently being transmitted.

In an optional embodiment, the apparatus further includes:
a discarding or punctuation module, configured to discard a transmission that overlaps the beam switching time; or perform a punctuated transmission on the transmission that overlaps the beam switching time.

If different beamforming directions are used for the plurality of transmissions continuously configured or scheduled on the time domain resource, an embodiment of this application provides different operations after the terminal completes a transmission, which can improve transmission efficiency while ensuring transmission quality.

It should be noted that, the information transmission apparatus provided in this embodiment of this application is an apparatus that can perform the above information transmission method, and all embodiments of the above information transmission method are applicable to the apparatus and the apparatus can achieve the same or similar beneficial effects.

The listen bandwidth determination apparatus or the information transmission apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palm computer, an on-board terminal, a wearable device, an ultra-mobile personal computer (Ultra-Mobile Personal Computer, UMPC), a netbook, or a personal digital assistant (Personal Digital Assistant, PDA); and the non-mobile electronic device may be a server, a network attached storage (Network Attached Storage, NAS), a personal computer (personal computer, PC), a television (Television, TV), a teller machine, or an automated machine. This is not specifically limited in this embodiment of this application.

The listen bandwidth determination apparatus or the information transmission apparatus in this embodiment of this application may be an apparatus having an operating system. The operating system may be Android (Android), IOS, or another possible operating system, which is not specifically defined in this embodiment of this application.

The listen bandwidth determination apparatus or the information transmission apparatus provided in this embodiment of this application can realize all processes realized in the method embodiment of FIG. 2 to FIG. 3. In order to avoid repetition, details are not described herein.

Optionally, as shown in FIG. 6, an embodiment of this application further provides a communication device 600, including a processor 601, a memory 602, programs or instructions stored in the memory 602 and executable on the processor 601. For example, when the communication device 600 is a terminal, when the programs or the instructions are executed by the processor 601, the processes of the embodiment of the listen bandwidth determination method for a shared spectrum are implemented, and the same technical effects can be achieved. When the communication device 600 is a network side device, when the programs or the instructions are executed by the processor 601, the processes of the embodiment of the listen bandwidth determination method for a shared spectrum are implemented, and the same technical effects can be achieved. In order to avoid repetition, details are not described herein.

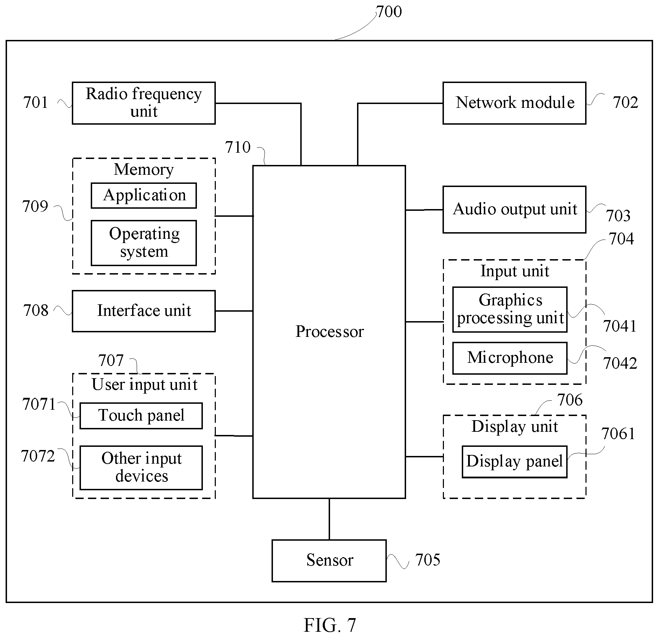

FIG. 7 is a schematic diagram of a hardware structure of a terminal for implementing an embodiment of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) that supplies power to various components. The power supply may be logically connected to the processor 710 through a power management system, thereby realizing functions such as charging, discharging, and power consumption management through the power management system. The terminal structure shown in FIG. 7 constitutes no limitation on the terminal, and the terminal may include more or fewer components than those shown in the figure, or a combination of some components, or different component layouts. Details are not described herein.

It should be noted that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061. The display panel 7061 may be configured in a form such as a liquid crystal display or an organic light-emitting diode. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include but is not limited to a physical keyboard, a function key (such as a volume control key or a power on/off key), a trackball, a mouse, and a joystick.

In this embodiment of this application, the radio frequency unit 701 receives downlink data from a network side device and provides the data to the processor 710 for processing. In addition, the radio frequency unit transmits uplink data to the network side device. Generally, the radio frequency unit 701 includes but is not limited to an antenna, at least one amplifier, a transceiver, a coupler, a low noise amplifier, and a duplexer.

The memory 709 may be configured to store a software program or an instruction as well as various data. The memory 709 may mainly include a program or instruction storage area and a data storage area. The program or instruction storage area may store an operating system, an application or an instruction required for at least one function (such as a sound playback function or an image playback function), and the like. In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may include at least one magnetic disk storage device, a flash memory device, or another non-volatile solid-state storage device.

The processor 710 may include one or more processing units. Optionally, an application processor and a modem processor may be integrated into the processor 710. The application processor mainly processes an operating system, a user interface, an application, an instruction, and the like. The modem processor mainly processes wireless communication, for example, may be a baseband processor. It may be understood that the modem processor may alternatively not be integrated in the processor 710.

The processor 710 is configured to adjust a listen before talk LBT bandwidth of a shared spectrum based on a first bandwidth, where the first bandwidth includes at least one of the following:
a bandwidth of a current active bandwidth part BWP;
a bandwidth of an initial BWP; and
a bandwidth of a target resource scheduled or configured by a network.

Alternatively, the processor 710 is configured to: if a plurality of consecutive transmissions, corresponding to different beam information, are multiplexed on a time domain resource, perform any one of the following operations after performing one transmission corresponding to beam information:
performing a subsequent transmission after beam switching without performing listen before talk LBT; and
performing one-shot LBT for new transmissions after beam switching and performing the subsequent transmission based on a listening result.

In this embodiment of this application, dynamically adjusting, by the communication device, the LBT bandwidth based on at least one of the bandwidth of the current active BWP, the bandwidth of the initial BWP, and the bandwidth of the target resource scheduled or configured by the network can avoid unnecessary channel listening by the communication devices on non-scheduled or non-active resources.

It should be noted that, the listen bandwidth determination apparatus provided in this embodiment of this application is an apparatus that can perform the above listen bandwidth determination method, and all embodiments of the above listen bandwidth determination method are applicable to the apparatus and the apparatus can achieve the same or similar beneficial effects.

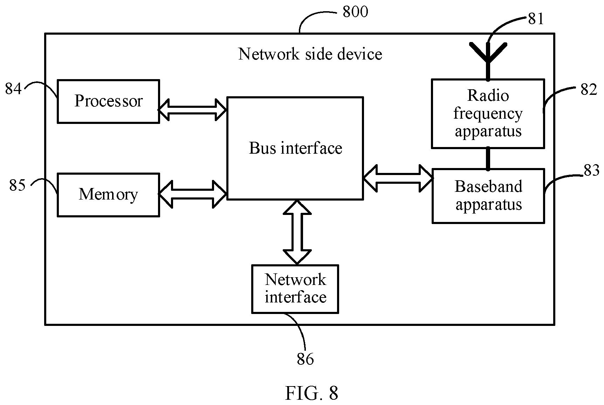

Specifically, an embodiment of this application further provides a network side device. As shown in FIG. 8, the network side device 800 includes an antenna 81, a radio frequency apparatus 82, and a baseband apparatus 83. The antenna 81 is connected to the radio frequency apparatus 82. In an uplink direction, the radio frequency apparatus 82 receives information through the antenna 81 and transmits the received information to the baseband apparatus 83 for processing. In a downlink direction, the baseband apparatus 83 processes to-be-transmitted information and transmits the to-be-transmitted information to the radio frequency apparatus 82. The radio frequency apparatus 82 processes the received information and then transmits the information through the antenna 81.

The above radio frequency apparatus may be located in the baseband apparatus 83, and the method in the above embodiment performed by the network side device may be implemented in the baseband apparatus 83. The baseband apparatus 83 includes a processor 84 and a memory 85.

The baseband apparatus 83 may include, for example, at least one baseband board. A plurality of chips are arranged on the baseband board, as shown in FIG. 8. One of the chips is, for example, a processor 84, and is connected to the memory 85 to call a program in the memory 85 to perform the operations of the network device shown in the above method embodiment.

The baseband apparatus 83 may further include a network interface 86 configured to exchange information with the radio frequency apparatus 82. The interface is, for example, a common public radio interface (Common Public Radio Interface, CPRI).

Specifically, the network side device in this embodiment of this application further includes an instruction or a program stored in the memory 85 and executable on the processor 84. The processor 84 calls the instruction or the program in the memory 85 to perform the method performed by each module shown in FIG. 6, and achieves the same technical effects. In order to avoid repetition, details are not described herein.

An embodiment of this application further provides a readable storage medium. The readable storage medium may be volatile or non-volatile. The readable storage medium stores programs or instructions. When the programs or the instructions are executed by the processor, the processes of the embodiment of the above listen bandwidth determination method or information transmission method are implemented, and the same technical effects can be achieved. In order to avoid repetition, details are not described herein.

The processor is a processor in the electronic device described in the above embodiment. The readable storage medium includes a computer-readable storage medium, such as a computer read-only memory (Read-Only Memory, ROM), a random access memory (Random Access Memory, RAM), a magnetic disk, or an optical disk.

An embodiment of this application further provides a chip. The chip includes a processor and a communication interface. The communication interface is coupled to the processor. The processor is configured to execute programs or instructions to implement the processes of the embodiment of the above listen bandwidth determination method or information transmission method, and can achieve the same technical effects. In order to avoid repetition, details are not described herein.

It should be understood that the chip in this embodiment of this application may also be referred to as a system level chip, a system chip, a chip system, a system on a chip, or the like.

An embodiment of this application further provides a computer program product stored in a non-transitory readable storage medium, and the computer program product is executed by at least one processor to implement the steps of the embodiment of the above listen bandwidth determination method or information transmission method, and the same technical effects can be achieved. In order to avoid repetition, details are not described herein.

It should be noted that, terms "comprise", "include" or any other variants herein are intended to encompass non-exclusive inclusion, so that a process, a method, an article or an apparatus including a series of elements not only include those elements, but also includes another element not listed explicitly or includes intrinsic elements for the process, the method, the article, or the apparatus. Without any further limitation, an element defined by the phrase "include one..." does not exclude existence of another same element in the process, the method, the article, or the apparatus that includes the elements. In addition, it should be noted that the scope of the method and the apparatus in the embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the above descriptions of the implementations, a person skilled in the art may clearly learn that the method in the above embodiments may be implemented by software and a necessary universal hardware platform, or may be implemented by hardware. However, in most cases, software and a general hardware platform are an example implementation. Based on this understanding, the technical solution of this application, in essence, or a part contributing to the related art may be embodied in a form of a software product. The software product is stored in a storage medium (such as a ROM/RAM, a disk, or a CD), including instructions for causing a terminal (such as a mobile phone, a computer, a server, an air conditioner, or a network device) to perform the method in the embodiments of this application.

Although the embodiments of this application are described above with reference to the drawings, this application is not limited to the specific embodiments described above. The above specific embodiments are illustrative but not restrictive. With the enlightenment of this application, a person of ordinary skill in the art may make many forms without departing from the concept of this application and the protection scope of the claims. These forms fall within the protection of this application.

The above descriptions are merely the specific implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A listen bandwidth determination method for a shared spectrum, comprising:
adjusting, by a communication device, a listen before talk LBT bandwidth of the shared spectrum based on a first bandwidth, wherein the first bandwidth comprises at least one of the following:
a bandwidth of a current active bandwidth part BWP;
a bandwidth of an initial BWP; and
a bandwidth of a target resource scheduled or configured by a network.

2. The method according to claim 1, wherein the adjusting, by a communication device, an LBT bandwidth of the shared spectrum based on a first bandwidth comprises:
adjusting the LBT bandwidth of the shared spectrum to a minimum bandwidth that covers the first bandwidth.

3. The method according to claim 2, wherein the minimum bandwidth that covers the first bandwidth comprises any one of the following:
the first bandwidth;
an integer multiple of the first bandwidth;
a unit bandwidth that covers the first bandwidth; and
an integer multiple of the unit bandwidth that covers the first bandwidth.

4. The method according to claim 1, wherein the target resource scheduled or configured by the network comprises at least one of the following:
at least one physical uplink shared channel resource for a configured grant;
at least one physical uplink transmission resource for a dynamic grant;
at least one physical downlink shared channel resource for semi-persistent scheduling;
at least one physical random access channel resource; and
at least one sounding reference signal resource.

5. An information transmission method, comprising:
if a plurality of consecutive transmissions, corresponding to different beam information, are multiplexed on a time domain resource, performing, by a terminal, any one of the following operations after performing one transmission corresponding to beam information:
performing, by the terminal, a subsequent transmission after beam switching without performing listen before talk LBT; and
performing, by the terminal after beam switching, one-shot LBT for new transmissions and performing the subsequent transmission based on a listening result.

6. The method according to claim 5, wherein the performing, by the terminal, a subsequent transmission after beam switching without performing listen before talk LBT comprises:
if a first condition is met, performing, by the terminal, the subsequent transmission after beam switching without performing listen before talk LBT, wherein the first condition comprises at least one of the following:
that a beam switching time is less than or equal to a first threshold; and
that the terminal obtains a channel occupancy time by applying omnidirectional LBT for a transmission corresponding to previous beam information.

7. The method according to claim 5, wherein the performing, by the terminal after beam switching, one-shot LBT for new transmissions and performing the subsequent transmission based on a listening result comprises:
if a second condition is met, performing, by the terminal after beam switching, one-shot LBT for the new transmissions and performing the subsequent transmission based on the listening result, wherein the second condition comprises at least one of the following:
that a beam switching time is greater than or equal to a second threshold;
that the terminal obtains a channel occupancy time by applying directional LBT for a transmission corresponding to previous beam information; and
that a listen beam direction used by the terminal when obtaining the channel occupancy time during the transmission corresponding to the previous beam information does not comprise a listening beam direction corresponding to a beam currently being transmitted.

8. The method according to claim 6 or 7, further comprising:
discarding a transmission that overlaps the beam switching time; or performing a punctuated transmission on the transmission that overlaps the beam switching time.

9. A listen bandwidth determination apparatus for a shared spectrum, comprising:
an adjustment module, configured to adjust a listen before talk LBT bandwidth of the shared spectrum based on a first bandwidth, wherein the first bandwidth comprises at least one of the following:
a bandwidth of a current active bandwidth part BWP;
a bandwidth of an initial BWP; and
a bandwidth of a target resource scheduled or configured by a network.

10. The apparatus according to claim 9, wherein the adjustment module comprises:
an adjustment submodule, configured to adjust the LBT bandwidth of the shared spectrum to a minimum bandwidth that covers the first bandwidth.

11. The apparatus according to claim 10, wherein the minimum bandwidth that covers the first bandwidth comprises any one of the following:
the first bandwidth;
an integer multiple of the first bandwidth;
a unit bandwidth that covers the first bandwidth; and
an integer multiple of the unit bandwidth that covers the first bandwidth.

12. The apparatus according to claim 9, wherein the target resource scheduled or configured by the network comprises at least one of the following:
at least one physical uplink shared channel resource for a configured grant;
at least one physical uplink transmission resource for a dynamic grant;
at least one physical downlink shared channel resource for semi-persistent scheduling;
at least one physical random access channel resource; and
at least one sounding reference signal resource.

13. A communication device, comprising a processor, a memory, and programs or instructions stored in the memory and executable on the processor, wherein when the programs or the instructions are executed by the processor, the steps of the listen bandwidth determination method for a shared spectrum according to any one of claims 1 to 4 are implemented.

14. An information transmission apparatus, comprising:
an operating module, configured to: if a plurality of consecutive transmissions, corresponding to different beam information, are multiplexed on a time domain resource, perform any one of the following operations after performing one transmission corresponding to beam information:
performing a subsequent transmission after beam switching without performing listen before talk LBT; and
performing one-shot LBT for new transmissions after beam switching and performing the subsequent transmission according to a listening result.

15. A terminal, comprising a processor, a memory, and programs or instructions stored in the memory and executable on the processor, wherein when the programs or the instructions are executed by the processor, the steps of the information transmission method according to any one of claims 5 to 8 are implemented.

16. A readable storage medium, storing programs or instructions, wherein when the programs or the instructions are executed by a processor, the steps of the listen bandwidth determination method for a shared spectrum according to any one of claims 1 to 4 are implemented, or when the programs or the instructions are executed by a processor, the steps of the information transmission method according to any one of claims 5 to 8 are implemented.

17. A chip, comprising a processor and a communication interface, wherein the communication interface is coupled to the processor, and the processor is configured to execute programs or instructions to implement the steps of the listen bandwidth determination method for a shared spectrum according to any one of claims 1 to 4, or implement the steps of the information transmission method according to any one of claims 5 to 8.

18. A computer program product, stored in a non-transitory storage medium, wherein the computer program product is executed by at least one processor to implement the steps of the listen bandwidth determination method for a shared spectrum according to any one of claims 1 to 4, or implement the steps of the information transmission method according to any one of claims 5 to 8.

19. A communication device, configured to perform the steps of the listen bandwidth determination method for a shared spectrum according to any one of claims 1 to 4, or perform the steps of the information transmission method according to any one of claims 5 to 8.
